# EUROPÄISCHE PATENTSCHRIFT

(11) **EP 0 316 669 B1**
(45) Veröffentlichungstag und Bekanntmachung des Hinweises auf die Patenterteilung: **31.03.1993**
(21) Anmeldenummer: 88118321.4
(22) Anmeldetag: 03.11.1988
(51) Int. Cl.: C08L 83/04, C08K 5/54

(54) **Unter Ausschluss von Wasser lagerfähige, bei Zutritt von Wasser bei Raumtemperatur zu Elastomeren vernetzende Massen**
Dry-storable compositions curable to elastomers by contact with water at ambient temperature
Composition qui peut être conservée à sec et qui durcit en élastomère à température ambiante par contact avec de l'eau

(30) Priorität: 05.11.1987 DE 3737458
(43) Veröffentlichungstag der Anmeldung: 24.05.1989
(73) Patentinhaber: WACKER-CHEMIE GMBH, D-81737 München (DE)
(72) Erfinder: Dorsch, Norman, D-8263 Burghausen (DE); Sommer, Oswin, Dr. Dipl.-Ing., D-8263 Burghausen (DE); Schiller, August, Dr. Dipl-Chem., D-8265 Neuötting (DE); Strasser, Alois, D-8263 Burghausen (DE)

(56) Entgegenhaltungen:
- BE-A- 881 499
- DE-A- 2 911 301
- US-A- 4 115 356

## Beschreibung

Unter Ausschluß von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit je Molekül mindestens drei direkt an Silicium gebundene hydrolysierbare Gruppen aufweisender Siliciumverbindung, wobei je Siliciumatom in derartiger Siliciumverbindung durchschnittlich mindestens eine Acyloxygruppe als hydrolysierbare Gruppe vorliegt, und einer Organosiliciumverbindung mit einer vicinalen Epoxygruppe hergestellt worden sind, sind bereits bekannt. Hierzu sei z.B. auf US 4 296 228 und US 4 115 356 verwiesen.

Es bestand nun die Aufgabe, unter Ausschluß von Wasser lagerfähige, bei Zutritt von Wasser bei Raumtemperatur zu Elastomeren vernetzende Massen bereitzustellen, die durch Vermischen von kondensationsfähige Endgruppen aufweisendem Diorganopolysiloxan mit je Molekül mindestens drei direkt an Silicium gebundene hydrolysierbare Gruppen aufweisender Siliciumverbindung, wobei je Siliciumatom in derartiger Siliciumverbindung durchschnittlich mindestens eine Acyloxygruppe als hydrolysierbare Gruppe vorliegt, und einer Organosiliciumverbindung mit mindestens einer vicinalen Epoxygruppe hergestellt worden sind und Elastomere ergeben, die auf von Poren freien oder geschlossenporigen silikatischen Unterlagen, insbesondere Glas, auf denen sie erzeugt wurden, auch nach bzw. unter Einwirkung von kurzwelligem Licht besonders lange fest haften. Diese Aufgabe wird durch die Erfindung gelöst.

Gegenstand der Erfindung sind unter Ausschluß von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit je Molekül mindestens drei direkt an Silicium gebundene hydrolysierbare Gruppen aufweisender Siliciumverbindung, wobei je Siliciumatom in derartiger Siliciumverbindung durchschnittlich mindestens eine Acyloxygruppe als hydrolysierbare Gruppe vorliegt, und einer Organosiliciumverbindung mit mindestens einer vicinalen Epoxygruppe hergestellt worden sind, dadurch gekennzeichnet, daß mindestens ein Teil der Organosiliciumverbindung(en) mit mindestens einer vicinalen Epoxygruppe ein cyclisches Diorganopolysiloxan ist.

Als kondensationsfähige Endgruppen aufweisende Diorganopolysiloxane können auch im Rahmen der Erfindung beliebige, kondensationsfähige Endgruppen aufweisende Diorganopolysiloxane verwendet werden, die auch bisher zur Herstellung von unter Ausschluß von Wasser lagerfähigen, bei Zutritt von Wasser zu Elastomeren vernetzenden Massen durch Vermischen von in den endständigen Einheiten je eine kondensationsfähige Endgruppe aufweisendem Diorganopolysiloxan mit je Molekül mindestens drei direkt an Silicium gebundene hydrolysierbare Gruppen aufweisender Siliciumverbindung, wobei je Siliciumatom in derartiger Siliciumverbindung durchschnittlich mindestens eine Acyloxygruppe als hydrolysierbare Gruppe vorliegt, verwendet werden konnten. Die meist dafür und auch im Rahmen der Erfindung bevorzugt verwendeten, kondensationsfähige Endgruppen aufweisenden Diorganopolysiloxane können z.B. durch die Formel

HO(SiR₂O)ₘSiR₂OH

wiedergegeben werden, wobei R gleiche oder verschiedene, einwertige, SiC-gebundene organische Reste und m eine ganze Zahl im Wert von mindestens 10 bedeutet.

Innerhalb der bzw. entlang den Siloxanketten der vorstehend angegebenen Formel, können, was durch derartige Formeln üblicherweise nicht dargestellt wird, zusätzlich zu den Diorganosiloxaneinheiten (SiR₂O) noch andere Siloxaneinheiten vorliegen. Beispiele für solche anderen, meist jedoch lediglich als mehr oder weniger schwer vermeidbare Verunreinigungen vorliegende Siloxaneinheiten sind insbesondere solche der Formel RSiO_{3/2}, R₃SiO_{1/2} und SiO_{4/2}, wobei R jeweils die oben dafür angegebene Bedeutung hat. Vorzugsweise beträgt jedoch die Menge an solchen anderen Siloxaneinheiten als Diorganosiloxaneinheiten insgesamt höchstens 2 Molprozent der in den kondensationsfähige Endgruppen aufweisende Diorganopolysiloxane vorliegenden Siloxaneinheiten. Die Hydroxylgruppen in der oben angegebenen Formel können, falls erwünscht, vollständig oder teilweise durch andere kondensationsfähige Gruppen, wie Acyloxygruppen, z.B. Acetoxygruppen, oder Alkoxygruppen, z.B. Ethoxygruppen, ersetzt sein.

Vorzugsweise enthalten die SiC-gebundenen organischen Reste in den im Rahmen der Erfindung verwendeten Organosiliciumverbindungen und damit auch die Reste R in den oben angegebenen Formeln höchstens 18 Kohlenstoffatome je Rest. Beispiele für derartige Reste sind Kohlenwasserstoffreste, wie Alkylreste, z.B. der Methyl-, Ethyl-, n-Propyl-, Isopropyl-, n-Butyl- und sec.-Butylrest sowie Octadecylreste; Kohlenwasserstoffreste mit aliphatischer Mehrfachbindung, z.B. der Vinyl- und Allylrest; Cycloalkylreste, wie der Cyclohexylrest und Methylcyclohexylreste; Arylreste, z.B. der Phenylrest und Xenylreste; Alkarylreste, z.B. Tolylreste; und Aralkylreste, z.B. Benzylrest. Diese Kohlenwasserstoffreste können gegenüber den zur Herstellung der erfindungsgemäßen Massen verwendeten anderen Stoffen als kondensationsfähige Endgruppen aufweisendem Diorganopolysiloxan inerte Substituenten aufweisen. Weitere Beispiele für einwertige, SiC-gebundene organische Reste in den im Rahmen der Erfindung verwendeten Organosiliciumverbindungen und damit auch für die Reste R in den oben angegebenen Formeln sind somit einwertige halogenierte Kohlenwasserstoffreste, wie Halogenalkylreste, z.B. der 3,3,3-Trifluorpropylrest, und Halogenarylreste, z.B. der o-, p- und m-Chlorphenylrest; aus Kohlenstoff-, Wasserstoff-, Ethersauerstoff- und Fluoratome(n) aufgebaute, einwertige aliphatische Reste, z.B. der gamma-1,1,2,2,3,3-Hexafluorpropyloxypropylrest und der gamma-1,1,2,2-Tetrafluorethoxypropylrest; Acyloxyalkylreste, wie der gamma-Acryloxypropylrest und gamma-Methacryloxypropylrest und Cyanalkylreste, z.B. der beta-Cyanethylrest. Vorzugsweise sind schon wegen der leichteren Zugänglichkeit mindestens 90 % der Anzahl der SiC-gebundenen organischen Reste in den im Rahmen der Erfindung verwendeten, kondensationsfähige Endgruppen aufweisenden Diorganopolysiloxanen und damit auch der Reste R in den oben angegebenen Formeln Methylreste.

Bei den kondensationsfähige Endgruppen aufweisenden Diorganopolysiloxanen kann es sich um gleiche oder verschiedene Homo- oder Mischpolymerisate handeln, wobei die einzelnen Moleküle gleiche oder verschiedene Kettenlängen aufweisen können.

Die durchschnittliche Viskosität von kondensationsfähige Endgruppen aufweisenden Diorganopolysiloxanen beträgt vorzugsweise 50 bis 500 000 mPa.s bei 25°C.

Als je Molekül mindestens drei direkt an Silicium gebundenen hydrolysierbare Gruppen aufweisende Siliciumverbindungen, wobei je Siliciumatom in derartigen Siliciumverbindungen durchschnittlich mindestens eine Acyloxygruppe als hydrolysierbare Gruppe vorliegt, können ebenfalls auch im Rahmen der Erfindung beliebige Siliciumverbindungen dieser Art verwendet werden, die auch bisher zur Herstellung von unter Ausschluß von Wasser lagerfähigen, bei Zutritt von Wasser zu Elastomeren vernetzenden Massen durch Vermischen von in den endständigen Einheiten je eine kondensationsfähige Endgruppe aufweisendem Diorganopolysiloxan mit je Molekül mindestens drei direkt an Silicium gebundene hydrolysierbare Gruppen aufweisender Siliciumverbindung, wobei je Siliciumatom in derartiger Siliciumverbindung durchschnittlich mindestens eine Acyloxygruppe als hydrolysierbare Gruppe vorliegt, verwendet werden konnten. Beispiele für derartige Siliciumverbindungen sind Silane der Formel

RₐSi(OOCR¹)_{b}(OR²)_{4-a-b} ,

worin R die oben dafür angegebene Bedeutung hat, R¹ Wasserstoff oder ein Kohlenwasserstoffrest, insbesondere ein Alkylrest mit 1 bis 18 Kohlenstoffatomen je Rest, R² ein Alkylrest mit 1 bis 4 Kohlenstoffatomen je Rest, a 0 oder 1 und b 1, 2 oder 3 ist.

Beispiele für Alkylreste R¹ sind der Methyl-, Ethyl-, n-Propyl-, Isopropyl-, n-Butyl-, sec.-Butyl-, tert.-Butyl-, 2-Ethylhexyl-, Myristyl- und Stearylrest.

Beispiele für Alkylreste R² sind der Methyl-, Ethyl-, n-Propyl-, Isopropyl-, n-Butyl-, sec.-Butyl- und tert.-Butylrest.

Weitere Beispiele für je Molekül mindestens drei direkt an Silicium gebundene hydrolysierbare Gruppen aufweisende Siliciumverbindungen, wobei je Siliciumatom in derartigen Siliciumverbindungen durchschnittlich mindestens eine Acyloxygruppe als hydrolysierbare Gruppe vorliegt, sind solche, die durch Umsetzung von tert.-Butoxyacetoxysilanen mit Methyltriacetoxysilan im Gewichtsverhältnis von 3:7 bis 1:9 bei Temperaturen von 120° bis 180°C hergestellt worden sind (vgl. US 3 886 118, ausgegeben 27. Mai 1975, S. Nitzsche et al., Wacker-Chemie GmbH) und solche, die durch Umsetzung von Alkyltriacetoxysilan mit tert.-Butanol und wäßriger Essigsäure erhältlich sind (vgl. die eingangs genannte US 4 296 228). Noch weitere Beispiele für je Molekül mindestens drei direkt an Silicium gebundene hydrolysierbare Gruppen aufweisende Siliciumverbindungen, wobei je Siliciumatom in derartigen Siliciumverbindungen durchschnittlich mindestens eine Acyloxygruppe als hydrolysierbare Gruppe vorliegt und das bekannteste einzelne Beispiel für derartige Siliciumverbindungen Methyltriacetoxysilan ist, sind in den Druckschriften, die in den oben genannten Patentschriften erwähnt sind, genannt.

Vorzugsweise werden die je Molekül mindestens drei direkt an Silicium gebundenen hydrolysierbare Gruppen aufweisenden Siliciumverbindungen, wobei je Siliciumatom in derartigen Siliciumverbindungen durchschnittlich mindestens eine Acyloxygruppe als hydrolysierbare Gruppe vorliegt, in Mengen von 1 bis 15 Gewichtsprozent, bezogen auf das Gesamtgewicht der jeweiligen unter Ausschluß von Wasser lagerfähigen, bei Zutritt von Wasser bei Raumtemperatur zu einem Elastomern vernetzenden Masse, eingesetzt.

Die cyclischen Diorganopolysiloxane mit mindestens einer vicinalen Epoxygruppe sind vorzugsweise solche der Formel

(Rₐ³ R₂₋ₐ SiO)ₙ ,

worin R und a jeweils die oben dafür angegebene Bedeutung haben, R³ ein Rest der Formel 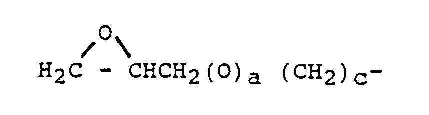
(a hat die oben dafür angegebene Bedeutung und c ist 2 oder 3) und n eine ganze Zahl von 3 bis 9, insbesondern 4 bis 6, ist, mit der Maßgabe, daß in mindestens einer der Einheitender Formel

Rₐ³ R₂₋ₐ SiO

a den Wert 1 hat.

Vorzugsweise liegt in jeder der Einheiten der Formel

Rₐ³ R₂₋ₐ SiO

ein Rest der Formel 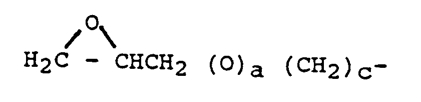
vor.

Weiterhin ist bevorzugt, daß in dem Rest der Formel 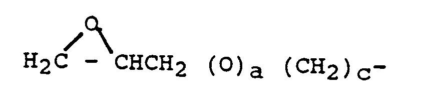
a den Wert 1 und c den Wert 3 hat.

Besonders bevorzugt als cyclisches Diorganopolysiloxan ist ein Gemisch aus solchen der Formel 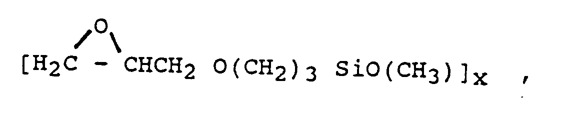
worin x 4, 5 oder 6 ist.

Vorzugsweise enthalten die erfindungsgemäßen Massen, bezogen auf das Gesamtgewicht der jeweiligen Masse, 0,2 bis 2 Gewichtsprozent, cyclisches Diorganopolysiloxan mit mindestens einer vicinalen Epoxygruppe.

Zusätzlich zu kondensationsfähige Endgruppen aufweisendem Diorganopolysiloxan, je Molekül mindestens drei direkt an Silicium gebundene hydrolysierbare Gruppen aufweisender Siliciumverbindung, wobei je Siliciumatom in derartiger Siliciumverbindung durchschnittlich mindestens eine Acyloxygruppe vorliegt, und cyclischem Diorganopolysiloxan mit mindestens einer vicinalen Epoxygruppe können ebenfalls auch bei der Bereitung der erfindungsgemäßen Massen Stoffe mitverwendet werden, die auch bisher bei der Bereitung von unter Ausschluß von Wasser lagerfähigen, bei Zutritt von Wasser bei Raumtemperatur zu Elastomeren vernetzenden Massen, durch Vermischen von kondensationsfähige Endgruppen aufweisendem Diorganopolysiloxan mit je Molekül mindestens drei direkt an Silicium gebundene hydrolysierbare Gruppen aufweisender Siliciumverbindung, wobei je Siliciumatom in derartiger Siliciumverbindung durchschnittlich mindestens eine Acyloxygruppe als hydrolysierbare Gruppe vorliegt, als weitere Stoffe mitverwendet werden konnten. Beispiele für solche zusätzlich mitverwendbaren Stoffe sind anorganische Füllstoffe mit einer Oberfläche von mindestens 20 m²/g, anorganische Füllstoffe mit einer Oberfläche von weniger als 20 m²/g, Pigmente, lösliche Farbstoffe, Duftstoffe, Organopolysiloxanharze, einschließlich solcher aus (CH₃)₃SiO_{1/2}- und SiO_{4/2}- Einheiten, rein-organische Harze, wie Polyvinylchloridpulver oder Pulver aus Homo- oder Mischpolymerisaten von Acylnitril, Ethylen, Vinylacetat, (Meth)acrylsäureestern, oder Styrol, wobei diese rein-organischen Harze auch bereits in Gegenwart von kondensationsfähige Endgruppen aufweisendem Diorganopolysiloxan erzeugt worden sein können, Korrosions-inhibitoren, Oxydationsinhibitoren, Bakterizide , Fungizide, Hitzestabilisatoren, Lösungsmittel, weitere Mittel zur Verbesserung der Haftfestigkeit der aus den Massen hergestellten Elastomeren auf den Unterlagen, auf denen sie erzeugt wurden, wie gamma-Glycidyloxypropyltriethoxysilan, Kondensationskatalysatoren, wie Zinnsalze oder Organozinn- salze von Carbonsäuren, wie Di-n-Butylzinndiacetat, Weichmacher, die bei Raumtemperatur flüssige, durch Trimethylsiloxygruppen endblockierte Dimethylpolysiloxane oder Phosphorsäureester oder Gemische aus den genannten Weichmachern, Lichtschutzmittel und zellenerzeugende Mittel, wie Azodicarbonamid.

Beispiele für anorganische Füllstoffe mit einer Oberfläche von mindestens 20 m²/g sind pyrogen erzeugte Siliciumdioxyde,unter Erhaltung der Struktur entwässerte Kieselsäurehydrogele, also sogenannte "Aerogele", und Metalloxyde, wie Titandioxyd, Ferrioxyd, Aluminiumoxyd und Zinkoxyd, soweit sie jeweils eine Oberfläche von mindestens 20 m²/g aufweisen. (Die hier in der Beschreibung angegebenen Werte für Oberflächengrößen von Füllstoffen sind BET- Werte, also Werte, die durch Stickstoffadsorption gemäß ASTM Special Technical Publication, Nr. 51, 1941, Seite 95 ff., bestimmt werden.)

Beispiele für Füllstoffe mit einer Oberfläche von weniger als 20 m²/g sind bzw. können sein: Quarzmehl, Diatomeenerde, Neuburger Kreide (englisch: Neuburger Chalk), Calciumsilikat, Zirkoniumsilikat, Calciumcarbonat, z. B. in Form von gemahlener Kreide oder in Form feinteiliger nadelförmiger Kristalle, calciniertes Aluminiumsilikat und pulverförmiges Natriumaluminiumsilikat mit Molekularsiebeigenschaften.

Auch faserige Füllstoffe, wie Asbeste oder Glasfasern oder Gemische aus den vorstehend genannten Fasern, insbesondere solche mit einer durchschnittlicher Länge von höchstens 0,5 mm, oder organische Fasern oder Gemische aus organischen Fasern und anorganischen Fasern können mitverwendet werden.

Zumindest Teilmengen aller oben genannten Füllstoffe, soweit sie anorganischer Natur sind, können hydrophobiert sein, beispielsweise durch Behandlung mit Dimethyldichlorsilan oder Trimethylethoxysilan oder Stearinsäure oder einem Gemisch aus mindestens zwei solcher Hydrophobierungsmittel. Falls erwünscht, kann eine solche Behandlung z. B. auch in einer Kugelmühle durchgeführt worden sein.

Es können Gemische aus verschiedenen Füllstoffen mit einer Oberfläche von mindestens 20 m²/g oder Füllstoffe mit einer Oberfläche von weniger als 20 m²/g oder Gemische aus mindestens einem Füllstoff mit einer Oberfläche von mindestens 20 m²/g und mindestens einem Füllstoff mit einer Oberfläche von weniger als 20 m²/g bei der Herstellung der erfindungsgemäßen Massen eingesetzt werden.

Zur Bereitung der erfindungsgemäßen Massen können alle Bestandteile der jeweiligen Masse in beliebiger Reihenfolge miteinander vermischt werden, wobei es jedoch bevorzugt ist, cyclisches Diorganopolysiloxan mit mindestens einer vicinalen Epoxygruppe als letzten Bestandteil einzumischen. Dieses Vermischen erfolgt vorzugsweise bei Raumtemperatur und unter Ausschluß von Wasser. Falls erwünscht, kann dieses Vermischen aber auch bei höheren Temperaturen erfolgen, z.B. bei einer Temperatur im Bereich von 35° bis 150°C.

Für die Vernetzung der erfindungsgemäßen Massen reicht der normale Wassergehalt der Luft aus. Die Vernetzung kann, falls erwünscht, auch bei höheren Temperaturen als Raumtemperatur , z. B. 35° bis 150°C, oder niedrigeren Temperaturen als Raumtemperatur, z. B. bei - 5° bis + 10°C durchgeführt werden. Die Vernetzung kann auch mittels dem normalen Wassergehalt der Luft übersteigenden Konzentrationen von Wasser, z. B. in Wasserdampf, durchgeführt werden.

Die erfindungsgemäßen Massen eignen sich ausgezeichnet zum Abdichten von waagrechten, schrägen oder senkrechten Fugen und ähnlichen Leerräumen mit lichten Weiten von z. B. 5 bis 50 mm, beispielsweise von Gebäuden, Land-, Luft- oder Wasserfahrzeugen, als Klebstoffe, insbesondere bei der Strukturverglasung (structural glazing), also beim Versiegeln, von rahmenlosen Glasscheiben, einschließlich Isolierglaseinheiten, auf Fassadenteile, wo eine Standfestigkeit der Verklebung unter dem Einfluß von Ultraviolett-Licht von besonders großer Bedeutung ist, sowie für Holz und rein-organische Kunststoffe, wie Polyvinylchlorid, Polyamide oder Epoxyharze, zum Beschichten verschiedenster Unterlagen, einschließlich gewebten und ungewebten Textilien, und zum Verkitten von Fensterscheiben mit dem Rahmen.

In den folgenden Beispielen und in der Beschreibung der Herstellung eines cyclischen Diorganopolysiloxans mit vicinalen Epoxygruppen beziehen sich alle Angaben von Teilen und Prozentsätzen auf das Gewicht, soweit nichts anderes angegeben ist.

### Beispiel 1

Bei Raumtemperatur und 10 hPa (abs.) werden in einem Planetenmischer 65 Teile eines in den endständigen Einheiten je eine Si-gebundene Hydroxylgruppe aufweisenden Dimethylpolysiloxans mit einer Viskosität von 80 000 mPa.s bei 25°C, 23 Teile eines durch Trimethylsiloxygruppen endblockierten Dimethylpolysiloxans mit einer Viskosität von 100 mPa.s bei 25°C, 5 Teile Methyltriacetoxysilan, 7,5 Teile eines pyrogen in der Gasphase erzeugten Siliciumdioxyds mit einer BET-Oberfläche von 150 m²/g, 0,5 Teile eines Gemisches aus Organopolysiloxanen der Formel 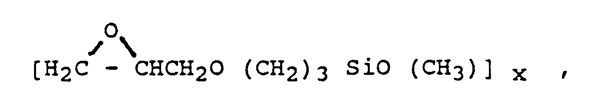
worin x 4, 5 oder 6 ist, und 0,01 Teile Di-n-butyl-Zinndiacetat vermischt.

### Beispiel 2

Die in Beispiel 1 beschriebene Arbeitsweise wird wiederholt mit der Abänderung, daß in die Masse zusätzlich 30 Teile gemahlene und mit Stearinsäure überzogene Kreide eingemischt werden.

### Vergleichsversuch a)

Die in Beispiel 1 beschriebene Arbeitsweise wird wiederholt mit der Abänderung, daß kein cyclisches Organopolysiloxan mit vicinalen Epoxygruppen mitverwendet wird.

### Vergleichsversuch b)

Die in Beispiel 2 beschriebene Arbeitsweise wird wiederholt mit der Abänderung, daß kein cyclisches Organopolysiloxan mit vicinalen Epoxygruppen mitverwendet wird.

### Vergleichsversuch c)

Die in Beispiel 1 beschriebene Arbeitsweise wird wiederholt mit der Abänderung, daß anstelle der 0,5 Teile des dort verwendeten Gemisches aus cyclischen Organopolysiloxanen mit vicinalen Epoxygruppen 1,0 Teile gamma-Glycidoxypropylmethoxysilan eingesetzt werden.

Stränge von Massen, die gemäß den Beispielen und den Vergleichsversuchen bereitet wurden, werden auf die Zinnspuren (von der Floatglasherstellung her) aufweisende und auf die von Zinnspuren freie Seite von Staub befreiten und entfetteten Glasplatten aufgetragen und zum Elastomeren an der Luft härten gelassen.

3 Wochen nach dem Auftragen der Stränge auf die Glasplatten werden die aus den Strängen entstandenen Elastomeren aus einem Abstand von 50 cm mit Ultraviolettlicht, welches das in DIN (Deutsche Industrie Norm) 52 455 vom September 1974 geforderte Spektrum aufweist, belichtet (4 Osram Vitalux 300 W-Lampen, wobei es sich bei der Wortkombination Osram Vitalux um ein registriertes Warenzeichen handeln dürfte, der Fa. Osram GmbH, Berlin und München, BRD). Die Ergebnisse, die beim gewaltsamen Entfernen der Elastomerstränge von den Unterlagen erhalten werden, sind in der folgenden Tabelle angegeben.

**Tabelle**

| Belichtungsdauer | | Beispiel | | Vergleichsversuch | | |
|---|---|---|---|---|---|---|
| Tage | | 1 | 2 | a | b | c |
| 30 | Glasseite mit Zinnspuren | K | K | A | A | A |
| 30 | Glasseite ohne Zinnspuren | K | K | AK | K | AK |
| 60 | Glasseite mit Zinnspuren | K | K | A | AK | A |
| 60 | Glasseite ohne Zinnspuren | K | K | A | AK | A |
| 90 | Glasseite mit Zinnspuren | K | K | A | A | A |
| 90 | Glasseite ohne Zinnspuren | K | K | A | A | A |
| A = Adhäsionsriß = Trennung des Elastomer-Strangs vom Glas K = Kohäsionsriß = Riß im Elastomer-Strang AK = Adhäsionsriß und Kohäsionsriß | | | | | | |

Die Herstellung des Gemisches aus Organopolysiloxanen der Formel 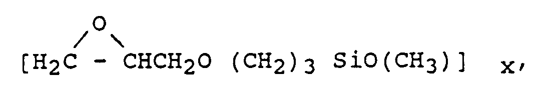
wobei x 4, 5 und 6 ist,
erfolgte wie folgt:
In einem auf Vakuumfestigkeit geprüften, getrockneten und mit Stickstoff gespülten, von der Kühlerseite her mit Stickstoff beatmeten Rührwerk werden 465 g wasserfreier (< 1000 ppm Wasser) Allylglycidether und 155 g Toluol gerührt. 1 g getrocknete gepulverte Aktivkohle und 0,2 ml einer 1-gewichtsprozentigen Lösung von PtCl₄ in n-Octan werden in die vorgelegte Mischung gegeben. Nach dem Aufheizen auf 100°C läßt man eine Lösung aus 465 g Allylglycidether und 408 g einer Mischung von cyclischen Methylhydrogensiloxanen mit 4 bis 6 Siloxaneinheiten je Molekül in 150 g Toluol zulaufen. Die Zulaufgeschwindigkeit des reaktiven Gemisches wird so eingestellt, daß sich ein konstanter mäßiger Rückfluß von Toluol bei ca. 135 bis 140°C Sumpftemperatur beginnend ergibt. Die Zulaufzeit liegt bei ca. 30 bis 45 Minuten. Man läßt bei 130°C unter Rückfluß ca. 30 Minuten weiterreagieren. Die Aktivkohle wird dann über ein einfaches Filter abgeschieden. Von dem Filtrat wird dann das Toluol abdestilliert. Anschließend wird bei 120°C und 10,6 bis 13,3 hPa (abs.) der überschüssige Allylglycidether destillativ entfernt. Es werden 1160 g eines Gemisches aus Organopolysiloxanen der obigen Formel erhalten mit einem Rest-Si-H-Gehalt von weniger als 0,02 %.

## Patentansprüche (Patentansprüche für folgende(n) Vertragsstaat(en): AT, BE, CH, DE, FR, GB, IT, LI, NL, SE)

1. Unter Ausschluß von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit je Molekül mindestens drei direkt an Silicium gebundene hydrolysierbare Gruppen aufweisender Siliciumverbindung, wobei je Siliciumatom in derartiger Siliciumverbindung durchschnittlich mindestens eine Acyloxygruppe als hydrolysierbare Gruppe vorliegt, und einer Organosiliciumverbindung mit mindestens einer vicinalen Epoxygruppe hergestellt worden sind, dadurch gekennzeichnet, daß mindestens ein Teil der Organosiliciumverbindung(en) mit mindestens einer vicinalen Epoxygruppe ein cyclisches Diorganopolysiloxan ist.

2. Massen nach Anspruch 1, dadurch gekennzeichnet, daß das cyclische Diorganopolysiloxan ein Gemisch aus Organopolysiloxanen der Formel 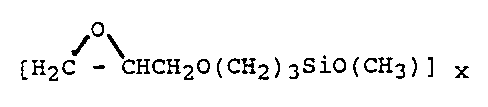 worin x 4, 5 oder 6 ist, ist.

3. Massen nach Anspruch 1 oder 2, dadurch gekennzeichnet, daß sie cyclisches Diorganopolysiloxan mit mindestens einer vicinalen Epoxygruppe in Mengen von 0,2 bis 2 Gewichtsprozent, bezogen auf das Gesamtgewicht der jeweiligen Masse, enthalten.

4. Verwendung der Massen nach mindestens einem der Ansprüche 1 bis 3 als Dichtungsmassen oder Klebstoffe auf von Poren freien oder geschlossenporigen silikatischen Unterlagen.

5. Verwendung der Massen nach Anspruch 4, dadurch gekennzeichnet, daß die Unterlagen aus Glas bestehen.

6. Verwendung der Massen nach mindestens einem der Ansprüche 1 bis 3 als Klebstoffe bei der Strukturverglasung.

## Patentansprüche (Patentansprüche für folgende(n) Vertragsstaat(en): ES)

1. Verfahren zur Herstellung von unter Ausschluß von Wasser lagerfähigen, bei Zutritt von Wasser bei Raumtemperatur zu Elastomeren vernetzenden Massen durch Vermischen von kondensationsfähige Endgruppen aufweisendem Diorganopolysiloxan mit je Molekül mindestens drei direkt an Silicium gebundene hydrolysierbare Gruppen aufweisender Siliciumverbindung, wobei je Siliciumatom in derartiger Siliciumverbindung durchschnittlich mindestens eine Acyloxygruppe als hydrolysierbare Gruppe vorliegt, und einer Organosiliciumverbindung mit mindestens einer vicinalen Epoxygruppe, dadurch gekennzeichnet, daß mindestens ein Teil der Organosiliciumverbindung(en) mit mindestens einer vicinalen Epoxygruppe ein cyclisches Diorganopolysiloxan ist.

2. Verfahren nach Anspruch 1, dadurch gekennzeichnet, daß als cyclisches Diorganopolysiloxan ein Gemisch aus Organopolysiloxanen der Formel 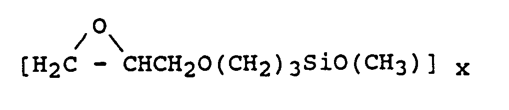 worin x 4, 5 oder 6 ist, eingesetzt wird.

3. Verfahren nach Anspruch 1 oder 2, dadurch gekennzeichnet, daß cyclisches Diorganopolysiloxan mit mindestens einer vicinalen Epoxygruppe in Mengen von 0,2 bis 2 Gewichtsprozent, bezogen auf das Gesamtgewicht der jeweiligen Masse, eingesetzt wird.

4. Verwendung der nach mindestens einem der Ansprüche 1 bis 3 hergestellten Massen als Dichtungsmassen oder Klebstoffe auf von Poren freien oder geschlossenporigen silikatischen Unterlagen.

5. Verwendung der Massen nach Anspruch 4, dadurch gekennzeichnet, daß die Unterlagen aus Glas bestehen.

6. Verwendung der nach mindestens einem der Ansprüche 1 bis 3 hergestellten Massen als Klebstoffe bei der Strukturverglasung.

## Claims (Claims for the following Contracting State(s): AT, BE, CH, DE, FR, GB, IT, LI, NL, SE)

1. Compositions which can be stored in the absence of water, but crosslink in the presence of water at room temperature to form elastomers and have been produced by mixing a diorganopolysiloxane containing condensation-capable terminal groups with a silicon compound containing at least three hydrolysable groups bound directly to silicon per molecule, an average of at least one acyloxy group being present as a hydrolysable group per silicon atom in the silicon compound of this type, and an organosilicon compound containing at least one vicinal epoxy group, characterised in that at least part of the organosilicon compound(s) containing at least one vicinal epoxy group is a cyclic diorganopolysiloxane.

2. Compositions according to Claim 1, characterised in that the cyclic diorganopolysiloxane is a mixture of organopolysiloxanes of the formula 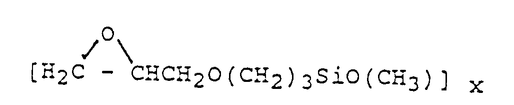 in which x is 4, 5 or 6.

3. Compositions according to Claim 1 or 2, characterised in that they contain a cyclic diorganopolysiloxane containing at least one vicinal epoxy group, in amounts from 0.2 to 2 per cent by weight, relative to the total weight of the particular composition.

4. Use of the compositions according to at least one of Claims 1 to 3 as sealants or adhesives on pore-free or closed-pore silicate substrates.

5. Use of the compositions according to Claim 4, characterised in that the substrates consist of glass.

6. Use of the compositions according to at least one of Claims 1 to 3 as adhesives in structural glazing.

## Claims (Claims for the following Contracting State(s): ES)

1. Process for the preparation of compositions which can be stored in the absence of water, but crosslink in the presence of water at room temperature to form elastomers by mixing a diorganopolysiloxane containing condensation-capable terminal groups with a silicon compound containing at least three hydrolysable groups bound directly to silicon per molecule, an average of at least one acyloxy group being present as a hydrolysable group per silicon atom in the silicon compound of this type, and an organosilicon compound containing at least one vicinal epoxy group, characterised in that at least part of the organosilicon compound(s) containing at least one vicinal epoxy group is a cyclic diorganopolysiloxane.

2. Process according to Claim 1, characterised in that a mixture of organopolysiloxanes of the formula 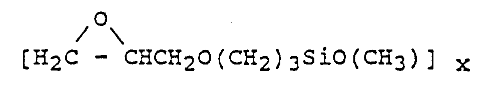 in which x is 4, 5 or 6 is used as a cyclic diorganopolysiloxane.

3. Process according to Claim 1 or 2, characterised in that a cyclic diorganopolysiloxane containing at least one vicinal epoxy group, in amounts from 0.2 to 2 per cent by weight, relative to the total weight of the particular composition, is used.

4. Use of the compositions prepared according to at least one of Claims 1 to 3 as sealants or adhesives on pore-free or closed-pore silicate substrates.

5. Use of the compositions according to Claim 4, characterised in that the substrates consist of glass.

6. Use of the compositions prepared according to at least one of Claims 1 to 3 as adhesives in structural glazing.

## Revendications (Revendications pour l'(les) Etat(s) contractant(s) suivant(s): AT, BE, CH, DE, FR, GB, IT, LI, NL, SE)

1. Compositions pouvant être stockées à l'abri de l'eau, réticulables à la température ambiante par apport d'eau pour donner des élastomères, qui ont été préparées par mélange d'un polydiorganosiloxane comportant des groupes terminaux condensables avec un composé du silicium, comportant par molécule au moins trois groupes hydrolysables directement liés au silicium, en moyenne au moins un groupe acyloxy étant présent en tant que groupe hydrolysable par atome de silicium dans ce composé du silicium, et avec un composé organique du silicium comportant un groupe époxy vicinal, caractérisées en ce qu'au moins une partie du ou des composés organiques du silicium comportant au moins un groupe époxy vicinal est un polydiorganosiloxane cyclique.

2. Compositions selon la revendication 1, caractérisées en ce que le diorganopolysiloxane cyclique est un mélange de polyorganosiloxanes de formule 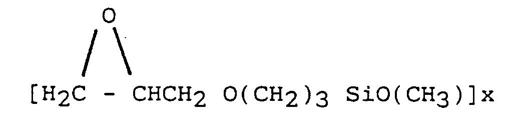 où x vaut 4, 5 ou 6.

3. Compositions selon la revendication 1 ou 2, caractérisées en ce qu'elles contiennent le polydiorganosiloxane cyclique comportant au moins un groupe époxy vicinal en des quantités de 0,2 à 2 % en poids par rapport au poids total de la composition considérée.

4. Utilisation des compositions selon au moins l'une des revendications 1 à 3 en tant que masses d'étanchéité ou adhésifs sur des subjectiles silicatés sans pores ou a pores fermés.

5. Utilisation des compositions selon la revendication 4, caractérisée en ce que les subjectiles sont en verre.

6. Utilisation des compositions selon au moins l'une des revendications 1 à 3, comme adhésifs dans les vitrages structuraux.

## Revendications (Revendications pour l'(les) Etat(s) contractant(s) suivant(s): ES)

1. Procédé de préparation de compositions pouvant être stockées à l'abri de l'eau, réticulables par apport d'eau à la température ambiante pour donner des élastomères, par mélange d'un polydiorganosiloxane comportant des groupes terminaux condensables avec un composé du silicium comportant par molécule au moins trois groupes hydrolysables directement liés au silicium, en moyenne au moins un groupe acyloxy étant présent en tant que groupe hydrolysable par atome de silicium dans ledit composé du silicium, et avec un composé organique du silicium comportant au moins un groupe époxy vicinal, caractérisé en ce qu'au moins une partie du ou des composés organiques du silicium comportant au moins un groupe époxy vicinal est un polydiorganosiloxane cyclique.

2. Procédé selon la revendication 1, caractérisé en ce qu'on utilise comme polydiorganosiloxane cyclique un mélange de polyorganosiloxanes de formule 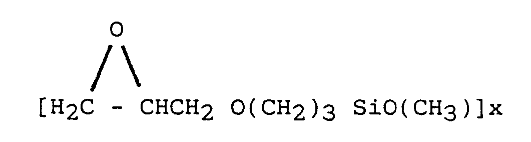 dans laquelle x vaut 4, 5 ou 6.

3. Procédé selon la revendication 1 ou 2, caractérisé en ce qu'on n'utilise un polydiorganosiloxane cyclique comportant au moins un groupe époxy vicinal en des quantités de 0,2 à 2 % en poids par rapport au poids total de la composition considérée.

4. Utilisation des compositions selon au moins l'une des revendications 1 à 3 en tant que masses d'étanchéité ou adhésifs sur des subjectiles silicatés sans pores ou à pores fermés.

5. Utilisation des compositions selon la revendication 4, caractérisée en ce que les subjectiles sont en verre.

6. Utilisation des compositions selon au moins l'une des revendications 1 à 3, comme adhésifs dans les vitrages structuraux.
